# EUROPÄISCHE PATENTSCHRIFT

(11) **EP 4 179 226 B1**
(45) Veröffentlichungstag und Bekanntmachung des Hinweises auf die Patenterteilung: **04.09.2024**
(21) Anmeldenummer: 21742371.4
(22) Anmeldetag: 07.07.2021
(51) Int. Cl.: F16F 15/167

(54) **DREHSCHWINGUNGSDÄMPFER**
TORSIONAL VIBRATION DAMPER
AMORTISSEUR DE VIBRATIONS DE TORSION

(30) Priorität: 08.07.2020 DE 102020118066
(43) Veröffentlichungstag der Anmeldung: 17.05.2023
(73) Patentinhaber: Hasse & Wrede GmbH, 12681 Berlin (DE)
(72) Erfinder: STEIDL, Michael, 10318 Berlin (DE); BOHMEYER, Stephan, 15366 Hoppegarten (DE)
(74) Vertreter: Specht, Peter
(86) Internationale Anmeldenummer: PCT/EP2021/068850
(87) Internationale Veröffentlichungsnummer: WO 2022/008600

(56) Entgegenhaltungen:
- WO-A1-2018/019729
- DE-A1- 2 117 930
- JP-A- 2008 057 582
- JP-A- 2008 190 614

## Beschreibung

Die vorliegende Erfindung betrifft einen Drehschwingungsdämpfer mit einem auf einer Antriebswelle eines Motors befestigbaren Nabenteil (Primärmasse) und einem das Nabenteil im radial äußeren Bereich umfassenden Schwungring (Sekundärmasse), wobei zwischen Nabenteil und Schwungring ein mit einem Fluid gefüllter Spalt und eine Dichtungseinrichtung vorgesehen sind, mittels derer das Austreten des Fluids vermieden werden soll, nach dem Oberbegriff des Anspruchs 1.

Ein gattungsgemäßer Drehschwingungsdämpfer ist aus der WO 2018/019729 A1 bekannt.

Das Dokument US 5,140,868 A beschreibt einen Viskositäts- und Kautschuk-Torsionsdämpfer mit einem Nabenteil, einem Riemenscheibenteil und Verbindungselementen zum elastischen Verbinden des Nabenteils und des Riemenscheibenteils.

Zum technologischen Hintergrund wird ferner die GB 11 05 292 A genannt.

Die bekannten Drehschwingungsdämpfer weisen einen nach außen versetztem Schwungring auf, was ihre Bauart von Konstruktionen unterscheidet, bei welchen der Schwungring komplett in einem separaten Gehäuse gekapselt gelagert ist.

Nachteil der letzteren Konstruktionen ist, dass die Masse des Gehäuses für die Funktion des Dämpfers irrelevant ist und durch die Kapselung des Schwungrings die Wärmeabfuhr limitiert ist.

Bei den bekannten Drehschwingungsdämpfern mit nach außen versetztem Schwungring muss sichergestellt werden, dass ein Austreten des zwischen Nabenteil und Schwungring befindlichen Fluids vermieden wird.

Bei der gattungsgemäßen Konstruktion bestehen die Dichtungseinrichtungen jeweils aus einem ersten, mit dem Nabenteil dicht verbundenen Ring sowie einem mit dem Schwungring dicht verbundenen zweiten Ring sowie einem Ring aus einem Elastomer, welcher einerseits abdichtend mit dem ersten und andererseits dem zweiten Ring verbunden ist.

Beschrieben wird dabei auch eine Konstruktion, bei welcher der aus Elastomer hergestellte Ring sowohl an radialen Flachen wie auch an axialen Flachen, insbesondere Kantenbereichen, der Ringe gleichzeitig befestigt ist bzw. anhaftet. Dabei verläuft der jeweilige Elastomerring insgesamt schräg zur radialen und zur axialen Richtung.

Der vorliegenden Erfindung liegt die Aufgabe zugrunde, einen Drehschwingungsdämpfer dieser Art mit Dichtungseinrichtungen zu versehen, welche gegenüber dem Stand der Technik nochmals vorteilhaft weiterentwickelt sind.

Diese Aufgabe wird dadurch gelöst, dass das jeweilige Dichtungselement mit Befestigungsabschnitten an einer jeweiligen außen liegenden Axialseite des ersten und zweiten Rings anvulkanisiert ist.

Durch eine derartige Konstruktion werden die Nachteile des Standes der Technik vermieden, da keinerlei Reibung zwischen Dichtungselementen und rotierenden Teilen des Drehschwingungsdämpfers auftreten können. Zudem kann das Dichtungselement die Relativbewegung zwischen dem Schwungring und dem Nabenteil dauerfest ausgleichen.

Die Dichtungselemente sind im Gegensatz zum Stand der Technik auf den außen liegenden axialen Flächen bzw. Axialseiten und den Mantelflächen jeweils beider Ringe und nicht an den innen liegenden Flächen, welche ihrerseits an dem Schwungring bzw. an dem Nabenteil angebracht sind, befestigt.

Die jeweiligen außen liegenden Axialseiten des ersten und zweiten Rings sind von dem Schwungring (Sekundärmasse) abgewandt.

Auf diese Weise ist der innen zwischen den Ringen liegende Raum nicht durch die Dichtungselemente beeinträchtigt bzw. verringert. So ergibt sich ein weiterer Vorteil, größere Trägheitsmomente des Schwungrings zu erzielen. Zudem ist es nicht erforderlich, den Schwungring im Bereich des Dichtelementes mit Ausnehmungen zu versehen.

Es ist insbesondere vorteilhaft, dass das jeweilige Dichtungselement weiterhin an einer jeweiligen Radialseite eines Außendurchmessers des ersten Rings und an einer jeweiligen Radialseite eines Innendurchmessers des zweiten Rings anvulkanisiert ist, da so ein jeder Befestigungsabschnitt des jeweiligen Dichtungselementes außen liegende Kantenbereiche der Axialseiten und Mantelflächen des jeweiligen Rings umgibt, wodurch ein verbesserter Halt und eine gute Abdichtung erreicht werden.

Der Begriff "Radialseite" bedeutet eine umlaufende Mantelfläche mit dem zugehörigen Durchmesser des jeweiligen Rings, welcher eine zylindrische Ringscheibe mit kreisförmigem Querschnitt mit einem Außen- und einem Innendurchmesser bildet.

Weiterhin ist es dabei vorteilhaft, dass der Außendurchmesser des ersten Rings kleiner als der Innendurchmesser des zweiten Rings ist, da die Dehnungen im Betrieb minimiert werden und sich hierdurch die Dauerhaltbarkeit erhöht.

Dazu ist es auch von Vorteil, wenn ein Dichtungsabschnitt des jeweiligen ringförmigen Dichtungselementes schräg unter einem Winkel zu der axialen Richtung einer Drehachse des Drehschwingungsdämpfers verläuft und einen Wert aufweist, der zwischen 15° und 50° liegt.

Eine solche abdichtende Verbindung in zwei Richtungen an der Primärmasse und/oder an der Sekundärmasse bildet jeweils eine besonders sichere und langlebige Verbindung aus. Hierdurch kann jeweils auch ein besonders gut definierter Zustand des Spalts im Dauereinsatz garantiert werden.

Die mit dem Nabenteil bzw. dem Schwungring dicht verbundenen ersten bzw. zweiten Ringe der Dichtungseinrichtungen sind bevorzugt aus Metall hergestellt.

Dabei ist es von Vorteil, wenn der Außendurchmesser des ersten Rings kleiner als der Innendurchmesser des zweiten Rings ist, da die Dehnungen im Betrieb minimiert werden und sich hierdurch die Dauerhaltbarkeit erhöht.

Bevorzugt ist der jeweilige Ring aus Elastomer einer Dichtungseinrichtung mit den am Nabenteil bzw. am Schwungring befestigten Ringen aus Metall durch eine während eines Elastomervernetzungsvorganges hergestellte Gummi-Metallverbindung abdichtend verbunden.

Bevorzugt wird als Elastomer zwischen den jeweils ersten und zweiten Ringen einer Dichtungseinrichtung ein hochtemperaturbeständiges Elastomer, wie z.B. EPDM oder Silikonmaterial verwendet. "Silikonmaterial" bedeutet im Rahmen dieser Schrift ein Material, das ein synthetisches Polymer enthält oder ist, bei dem Siliziumatome über Sauerstoffatome verknüpft sind.

Das Dichtungselement kann aus einem anorganisch gefüllten Silikonelastomer bestehen, wobei der Anteil des anorganischen Materials mindestens 30% beträgt.

Dies ist besonders zweckmäßig deshalb, weil die genannten Materialien auch in hohen Temperaturbereichen geeignet sind.

Zudem hat das Material geringen Einfluss auf die Lebensdauer von Silikonöl. Umgekehrt ist das Material gegenüber dem Silikonöl beständig und quillt nur gering.

Besonders vorteilhaft ist es, dass sowohl das Silikonöl im Drehschwingungsdämpfer als auch die Dichtungseinrichtung mit der Elastomerspur des über die Lebensdauer des Dämpfers halten. Andere Materialien würden hingegen zu einem starken Abbau des Silikonöls führen, reines Silikon würde zu stark quellen.

Bei den jeweiligen Dichtungseinrichtungen handelt es sich konstruktionsgemäß nicht um Gleitdichtungen, so dass eine sichere und dauerhafte komplette Abdichtung erreicht wird.

Die Dichtungseinrichtungen müssen nicht eingepresst werden, wodurch sich der Vorteil ergibt, dass die Dichtungseinrichtungen spannungsfrei verbaut werden können. So kann ein definierter Zustand des Spalts im Drehschwingungsdämpfer garantiert werden, insbesondere wenn der Schwungring gegenüber dem Nabenteil auf Gleitlagern gelagert ist.

Für eine vorteilhaft exakte Einhaltung der Spaltweite kann der Schwungring gegenüber dem Nabenteil auf Gleitlagern radial und/oder axial definiert gelagert sein.

Besonders gute Eigenschaften für Lagerung und Montage ergeben sich, wenn das Dichtungselement einen axialen Vorsprung als Lippe aufweist. Die Anformung und Gestaltung der nach sich nach außen erstreckenden Lippe wird in einfacher Weise dadurch vorteilhaft ermöglicht, dass die Dichtungselemente nicht auf den außen liegenden axialen Flächen bzw. Axialseiten der ersten Ringe sondern auch auf den außen liegenden axialen Flächen bzw. Axialseiten der Ringe befestigt sind, also jeweils auf beiden außen liegenden Axialseiten.

Es ist zudem vorteilhaft, wenn das Dichtungselement eine Abdeckung als zusätzlichen mechanischen Schutz der Dichtungseinrichtung vor Beschädigung aufweist. Diese kann vorteilhaft ein an dem ersten Ring angebrachtes Blech sein, das nach außen radial geöffnet ist, wobei eine Wand der Abdeckung parallel zu dem Dichtungsabschnitt des Dichtungselementes in einem Abstand zu dem Dichtungsabschnitt angeordnet ist.

Die nach außen radiale Öffnung des Blechs ermöglicht einen Abtransport von Schmutz oder Partikeln, die sich an der Elastomerspur bzw. dem Dichtungselement sammeln.

Weitere Merkmale und Vorteile der Erfindung ergeben sich aus weiteren Unteransprüchen und der nachfolgenden Beschreibung zweier Ausführungsbeispiele der Erfindung. Es zeigen:
- **Fig. 1**: eine schematische Teilschnittdarstellung eines Drehschwingungsdämpfers nach dem Stand der Technik;
- **Fig. 2**: eine schematische Teilschnittdarstellung eines erfindungsgemäßen Drehschwingungsdämpfers;
- **Fig. 3**: eine schematische Vorderansicht eines Deckels des erfindungsgemäßen Drehschwingungsdämpfers nach Fig. 2;
- **Fig. 4**: eine schematische Schnittansicht des Deckels nach Fig. 3; und
- **Fig. 5-9**: vergrößerte schematische Schnittansichten des Bereiches V aus Fig. 3 und Fig. 4.

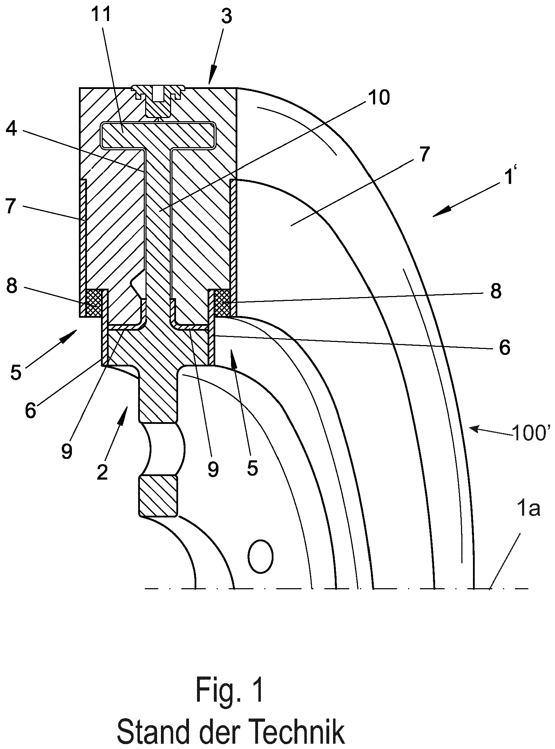

**Fig. 1** zeigt einen Drehschwingungsdämpfer 1' aus dem Stand der Technik, den das Dokument WO 2018/019729 A1, auf welches hier verwiesen wird, ausführlich mit Aufbau und Funktion des Drehschwingungsdämpfers 1 beschreibt.

Der Drehschwingungsdämpfer 1' mit einer Drehachse 1a umfasst ein auf einer Antriebswelle eines Motors befestigbares Nabenteil 2 (Primärmasse), einen das Nabenteil 2 im radial äußeren Bereich umfassenden Schwungring 3 (Sekundärmasse), wobei zwischen dem Nabenteil 2 und dem Schwungring 3 ein Spalt 4 vorgesehen ist, welcher mit einem Fluid, vorzugsweise einem Silikonöl, gefüllt ist, und Dichtungseinrichtungen 5 zur Abdichtung des Spaltes 4 nach außen. Es handelt sich dabei um einen außenliegenden Schwungring 3.

Jede Dichtungseinrichtung 5 weist jeweils einen ersten, mit dem Nabenteil 2 dicht verbundenen Ring 6 sowie einem mit dem Schwungring 3 ebenfalls dicht verbundenen zweiten Ring 7 sowie einem Ring 8 aus einem Elastomer auf, welcher einerseits abdichtend mit dem ersten Ring 6 und andererseits abdichtend mit dem zweiten Ring 7 verbunden ist.

Die Ringe 6, 7 bestehen vorzugsweise aus Metall und sind mit dem Nabenteil 2 bzw. dem Schwungring 3 durch ein geeignetes Verbindungsverfahren, insbesondere Schrauben, Schweißen, Kleben, Löten oder dergleichen fest und dicht verbunden.

Der jeweilige, aus Elastomer, vorzugsweise aus hochtemperaturfähigem Elastomer, z.B. Silikonmaterial, hergestellte Ring 8 ist mit den beiden ersten und zweiten Ringen 6, 7 nach Art eines Verbundteils umlaufend abdichtend verbunden. Diese Verbindung ist durch eine insbesondere während eines Elastomervernetzungsvorganges hergestellte Gummi-Metallverbindung.

Der Ring 6, Ring 7 und Ring 8 bilden eine Baugruppe, die auch als Deckel 100' bezeichnet wird. Der Drehschwingungsdämpfer 1' weist zwei Deckel 100' auf.

Im Stand der Technik gemäß Fig. 1 ist der Ring 8 aus Elastomer an einander gegenüberliegenden Flächen der in radialer Richtung einander überlappenden ersten und zweiten Ringe 6, 7 anvulkanisiert.

Der Schwungring 3 ist hier gegenüber dem Nabenteil 2 auf Gleitlagern 9 gelagert, und zwar sowohl radial wie auch axial, wodurch die Größe des Spaltes 4 genau definiert ist.

Der Schwungring 3 besteht aus mindestens zwei Bauteilen, um diesen Schwungring 3 auf dem Nabenteil 2 montieren zu können. Hierbei sind alle bisher bekannten Konstruktionsformen sowie weitere denkbar.

Das Nabenteil 2 ist in den dargestellten Ausführungsbeispielen mit einem radial nach außen vorstehenden Flansch 10 versehen, der im äußeren Randbereich abgeschlossen wird durch einen in Axialrichtung verlaufenden Steg 11, der sich zu beiden Seiten des Flansches 10 hin erstrecken kann, wodurch sich eine T-Form ergibt, aber auch lediglich zu einer Seite des Flansches 10 hin gesehen verlaufen kann, so dass sich ein L-förmiger Querschnitt ergibt. Durch diese Geometrie ist der Schwungring 3 sowohl in Radialrichtung wie auch in Axialrichtung gegenüber dem Nabenteil 2 fixiert, wobei, wie schon erwähnt, durch die Gleitlager 9 die Größe des umlaufenden Spaltes 4 stets definiert ist.

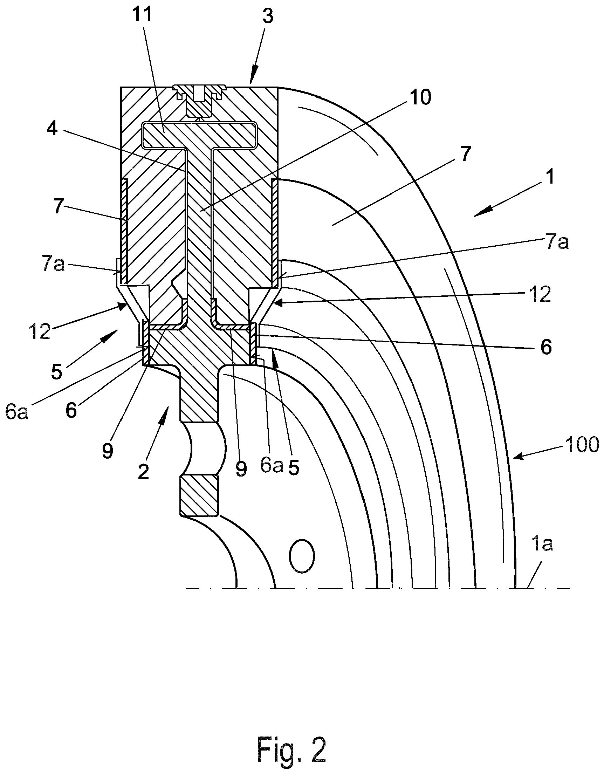

**Fig. 2** stellt eine Teilschnittdarstellung eines erfindungsgemäßen Drehschwingungsdämpfers 1 dar.

Der erfindungsgemäße Drehschwingungsdämpfer 1 unterscheidet von dem oben beschriebenen Drehschwingungsdämpfer 1' des Standes der Technik nach Fig. 1 in der Dichtungseinrichtung 5.

Hierbei ist hingegen vorgesehen, dass ein aus Elastomer hergestelltes ringförmiges Dichtungselement 12 anstelle des Rings 8 an größerflächigen, außen liegenden axialen und radialen Kantenbereichen 6a, 7a der Ringe 6 und 7 gleichzeitig anvulkanisiert ist. Die Kantenbereiche 6a, 7a sind somit Befestigungsflächen für das Dichtungselement 12. Dies wird unten noch weiter beschrieben.

Jede Dichtungseinrichtung 5 besteht hierbei auch jeweils aus dem ersten, mit dem Nabenteil 2 dicht verbundenen Ring 6, dem mit dem Schwungring 3 ebenfalls dicht verbundenen zweiten Ring 7 sowie dem ringförmigen Dichtungselement 12 aus einem Elastomer, welches einerseits abdichtend mit dem ersten Ring 6 und andererseits abdichtend mit dem zweiten Ring 7 verbunden ist.

Im Unterschied zum Stand der Technik nach Fig. 1 überlappen sich der erste Ring 6 und der zweite Ring 7 einer jeweiligen Dichtungseinrichtung 5 in radialer Richtung nicht. Dabei ist der Außendurchmesser des ersten Rings 6 kleiner als der Innendurchmesser des zweiten Rings 7.

Die jeweils ersten und zweiten Ringe 6, 7 der jeweiligen Dichtungseinrichtung 5 sind hier in axial von einander beabstandeten Ebenen angeordnet.

Die jeweils ersten und zweiten Ringe 6, 7 der jeweiligen Dichtungseinrichtung 5 bestehen auch hier vorzugsweise aus Metall und sind mit dem Nabenteil 2 bzw. dem Schwungring 3 durch ein geeignetes Verbindungsverfahren umlaufend verbunden, insbesondere umlaufend dicht verbunden.

Das jeweilige, aus Elastomer, vorzugsweise aus hochtemperaturfähigem Elastomer, z.B. Silikonmaterial, hergestellte ringförmige Dichtungselement 12 ist mit den beiden ersten und zweiten Ringen 6, 7 nach Art eines Verbundteils abdichtend verbunden, insbesondere umlaufend abdichtend verbunden. Bevorzugt ist das jeweilige ringförmige Dichtungselement 12 aus Elastomer der jeweiligen Dichtungseinrichtung 5 mit den am Nabenteil 2 bzw. am Schwungring 3 befestigten Ringen 6, 7 aus Metall durch eine insbesondere während eines Elastomervernetzungsvorganges hergestellte Gummi-Metallverbindung abdichtend verbunden.

Hierdurch ergibt sich eine einwandfreie und dauerhafte Abdichtung des Spaltbereiches, wobei bei der Verwendung von hochtemperaturfähigen Elastomeren, z.B. Silikonmaterial für die jeweiligen ringförmigen Dichtungselemente 12 der Vorteil gegeben ist, dass diese auch in hohen Temperaturbereichen geeignet sind.

Es ist besonders vorteilhaft, dass das aus einem Elastomer, bevorzugt aus Silikon, hergestellte ringförmige Dichtungselement 12 an den Kantenbereichen 6a, 7a der einander gestaffelt angeordneten außen liegenden axialen Flächen und an einander gegenüberliegenden radialen Flächen der ersten und zweiten Ringe 6, 7 anvulkanisiert ist. Dies wird unten noch weiter beschrieben.

Unter dem Begriff "gestaffelt" ist zu verstehen, dass diese außen liegenden axialen Flächen bzw. deren Kantenbereiche 6a, 7a in radialer Richtung übereinander angeordnet sind und beide in die gleiche Richtung, nämlich nach außen, weisen, wobei ein Innendurchmesser des Kantenbereiches 7a des zweiten Rings 7 größer ist als ein Außendurchmesser des ersten Rings 6.

Der Schwungring 3 ist auch hier vorteilhafterweise gegenüber dem Nabenteil 2 auf Gleitlagern 9 gelagert, und zwar sowohl radial wie auch axial, wodurch die Größe des Spaltes 4 genau definiert ist.

Auf diese Weise sind Deckel 100 des erfindungsgemäßen Drehschwingungsdämpfers 1 gebildet, welche jeweils den ersten Ring 6, den zweiten Ring 7 und das Dichtungselement 12 aufweisen.

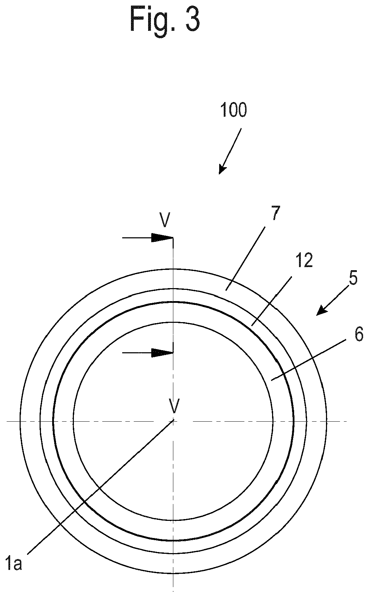

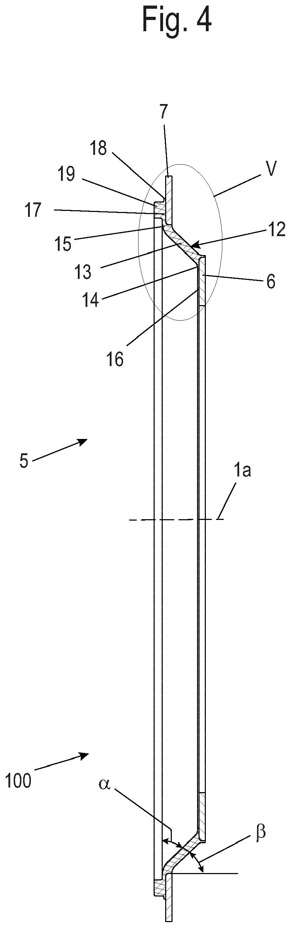

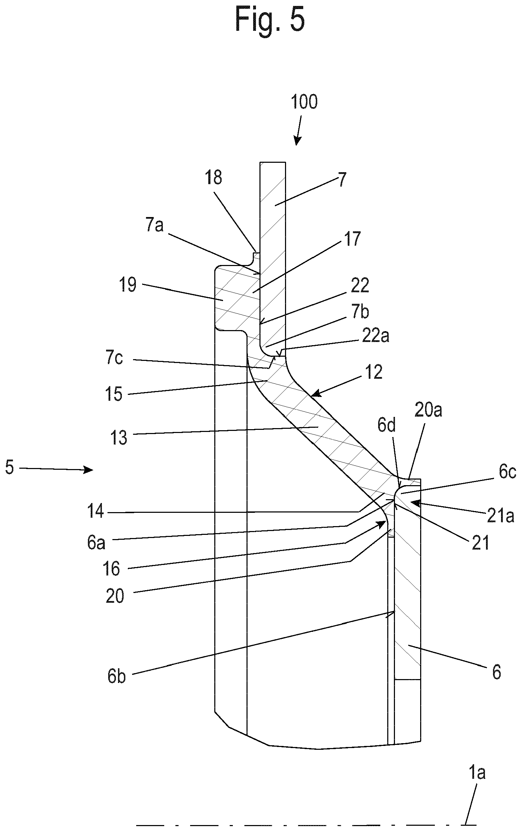

**Fig. 3** zeigt dazu eine schematische Vorderansicht des Deckels 100 des erfindungsgemäßen Drehschwingungsdämpfers 1 nach Fig. 2. In **Fig. 4** ist eine schematische Schnittansicht des Deckels 100 nach Fig. 3 dargestellt. Eine vergrößerte Darstellung des Bereiches V-V des Deckels 100 nach Fig. 3 und des Bereiches V in Fig. 4 zeigt **Fig. 5****.**

Ein Rand des Außendurchmessers des ersten Rings 6 ist in einem radialen Abstand und in einem axialen Abstand zu einem Rand des Innendurchmessers des zweiten Rings 7 angeordnet.

Ein Dichtungsabschnitt 13 des jeweiligen ringförmigen Dichtungselementes 12 verläuft dabei insgesamt schräg zur radialen und zur axialen Richtung und haftet jeweils sowohl an den außen liegenden Axialseiten und den Radialseiten der jeweiligen Ringe 6, 7.

Unter dem Begriff "schräg zur radialen Richtung und zur axialen Richtung" ist zu verstehen, dass der Dichtungsabschnitt 13 unter einem Winkel α zu der radialen Richtung, die senkrecht auf der axialen Richtung der Drehachse 1a steht, und unter einem Winkel β zu der axialen Richtung der Drehachse 1a verläuft.

Die außen liegenden Axialseiten der jeweiligen Ringe 6, 7 weisen dabei die Kantenbereiche 6a und 7a auf.

Der Begriff "außen liegende Axialseiten" bedeutet die jeweiligen Seiten bzw. Seitenflächen der Ringe 6, 7 beider Dichtungseinrichtungen 5, welche nach außen weisen, somit vom Schwungring 3 abgewandt sind und im Gegensatz zu innenliegenden Seiten weder mit dem Schwungring 3 noch mit dem Nabenteil 2 verbunden sind.

Unter dem Begriff "Radialseiten" sind die jeweiligen umlaufenden radialen Mantelflächen mit dem zugehörigen Durchmesser des jeweiligen Rings 6, 7. Die Ringe 6, 7 bilden jeweils eine zylindrische Ringscheibe mit kreisförmigem Querschnitt mit einem Außen- und einem Innendurchmesser.

Dies wird unten im Zusammenhang mit Fig. 5 noch näher erläutert.

Dabei ist vorteilhaft vorgesehen, dass die beiden Ringe 6, 7, also die beiden Metallringe der Dichtungseinrichtungen 5, unterschiedliche Durchmesser (innen und außen) aufweisen und dass das als Elastomerring ausgebildete Dichtungselement 12 nach Art einer Elastomerspur axial unter dem Winkel β verläuft, dessen Wert zwischen 15 und 50° liegt. Der zugehörige Winkel α zur radialen Richtung weist dann den Wert α = 90°- β auf.

Dies führt zu einer sehr guten Dauerhaltbarkeit des Dichtungselementes 12 bei starker mechanischer Beanspruchung. Der Einfluss des Materials des Dichtungselementes 12 auf die Lebensdauer des Silikonöls in dem Spalt 4 ist gering. Zudem ist die Beständigkeit des Materials des Dichtungselementes 12 gegenüber dem Silikonöl über die Dämpferlebensdauer ebenfalls nur gering (geringe Quellung).

Das Dichtungselement 12 umfasst den umlaufenden Dichtungsabschnitt 13 mit Übergangsabschnitten 14, 15 und Befestigungsabschnitten 16, 17. Dies ist am besten in der vergrößerten Darstellung in Fig. 5 zu erkennen.

Der Dichtungsabschnitt 13 ist an seinem unteren Ende durch den konkaven (in Bezug auf die Außenseite) Übergangsabschnitt 14 mit dem ersten Befestigungsabschnitt 16 verbunden. Der Befestigungsabschnitt 16 weist von dem zweiten Ring 7 abgewandt eine umlaufende Ausnehmung 21 auf, welche axial durch einen sich in radialer Richtung erstreckenden umlaufenden Überstand 20 und radial durch einen weiteren, sich in axialer Richtung erstreckenden umlaufenden Überstand 20a begrenzt ist.

Das Dichtungselement 12 ist mit dem ersten Befestigungsabschnitt 16 derart an der Axialseite und der Radialseite des Außendurchmessers des ersten Rings 6 anvulkanisiert, dass die Ausnehmung 21 den Außenrand des ersten Rings 6 umgibt. Dabei ist der Befestigungsabschnitt 17 mit dem radialen Überstand 20 mit dem Kantenbereich 6a des ersten Rings 6 und der axiale Überstand 20a mit der Mantelfläche 6d des Außendurchmessers des ersten Rings 6 verbunden.

Eine Rundung 6c der Kante zwischen Kantenbereich 6a und Mantelfläche 6d des ersten Rings 6 ist von einem damit korrespondierenden Abschnitt in Art einer Hohlkehle 21a der Ausnehmung 21 des Dichtungselementes 12 dicht umgeben.

In ähnlicher Weise ist der Dichtungsabschnitt 13 an seinem oberen Ende durch den konvexen Übergangsabschnitt 15 mit dem zweiten Befestigungsabschnitt 17 verbunden. Der Befestigungsabschnitt 17 weist dem zweiten Ring 7 zugewandt eine Ausnehmung 22 auf, welche axial durch einen sich in radialer Richtung erstreckenden Überstand 18 und radial durch eine umlaufende Hohlkehle 22a begrenzt ist.

Das Dichtungselement 12 ist mit dem zweiten Befestigungsabschnitt 17 derart an der Axialseite und der Radialseite des Innendurchmessers des zweiten Rings 7 anvulkanisiert, dass die Ausnehmung 22 den Innenrand des zweiten Rings 7 umgibt. Dabei ist der Befestigungsabschnitt 17 mit dem radialen Überstand 18 mit dem Kantenbereich 7a des zweiten Rings 7 und der Hohlkehle 22a mit der Mantelfläche 7d des Innendurchmessers des zweiten Rings 7 verbunden. Eine Rundung 7b der Kante zwischen Kantenbereich 7a und Mantelfläche 7d des zweiten Rings 7 ist von der damit korrespondierenden Hohlkehle 22a der Ausnehmung 22a des Dichtungselementes 12 dicht umgeben.

Der Befestigungsabschnitt 17 weist hier einen axialen Vorsprung auf, welcher von dem Befestigungsabschnitt 17 nach außen hervorsteht. Dieser Vorsprung wird hier als Lippe 19 bezeichnet und ist im Querschnitt rechteckig mit abgerundeten Kanten. Diese integrierte Lippe 19 verhindert eine Beschädigung des Dichtungselementes 12 während des Baus des Drehschwingungsdämpfers 1, des Transports und der Montage.

Die Anformung und Gestaltung der nach sich nach außen erstreckenden Lippe 19 ist besonders einfach und wird dadurch in einfacher Weise ermöglicht, dass die Dichtungselemente 12 nicht auf den außen liegenden axialen Flächen bzw. Axialseiten der ersten Ringe 6 sondern auch auf denen der Ringe 7 befestigt sind.

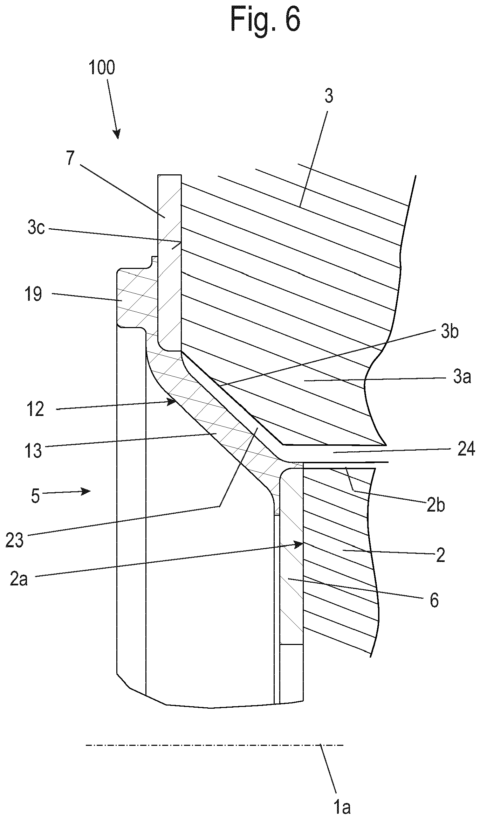

**Fig. 6** bis **8** zeigen weitere vergrößerte schematische Schnittansichten des Bereiches V aus Fig. 3 und Fig. 4 mit drei beispielhaften Varianten der Ausbildung des Schwungrings 3 im Bereich des Dichtungselementes 12. Ein Gleitlager 9 ist hier nicht gezeigt, aber vorstellbar.

Da die Dichtungselemente 12 auf den außen liegenden axialen Flächen bzw. Axialseiten und den Mantelflächen 6d, 7c der Ringe 6, 7 und nicht an den innen liegenden Flächen befestigt sind, ist der Raum zwischen den zweiten Ringen 7 nicht durch die Dichtungselemente 12 beeinträchtigt bzw. verringert. So ergibt sich ein weiterer Vorteil, größere Trägheitsmomente des Schwungrings 3 zu erzielen. Zudem ist es nicht erforderlich, den Schwungring 3 im Bereich des Dichtelementes 12 mit Ausnehmungen zu versehen.

In **Fig. 6** ist die Unterseite des Schwungrings 3 mit einem Innenabschnitt 3a gezeigt. Der Innenabschnitt 3a ist hier in einem nur geringen Abstand zu einem Rand 2a des Nabenteils 2 angeordnet. Ein schräg verlaufender Rand 3b des Innenabschnitts 3a des Schwungrings 3 verläuft in etwa parallel zu dem ebenfalls schräg verlaufenden Dichtungsabschnitt 13 des Dichtungselementes 13.

Zwischen dem Dichtungsabschnitt 13 des Dichtungselementes 13 und dem Rand 3b des Innenabschnitts 3a des Schwungrings 3 ist ein geringer Zwischenraum 23 festgelegt, welcher mit einem, ebenfalls geringen, weiteren Zwischenraum 24 zwischen dem Innenabschnitt 3a des Schwungrings 3 und dem Rand des Nabenteils 2 kommuniziert.

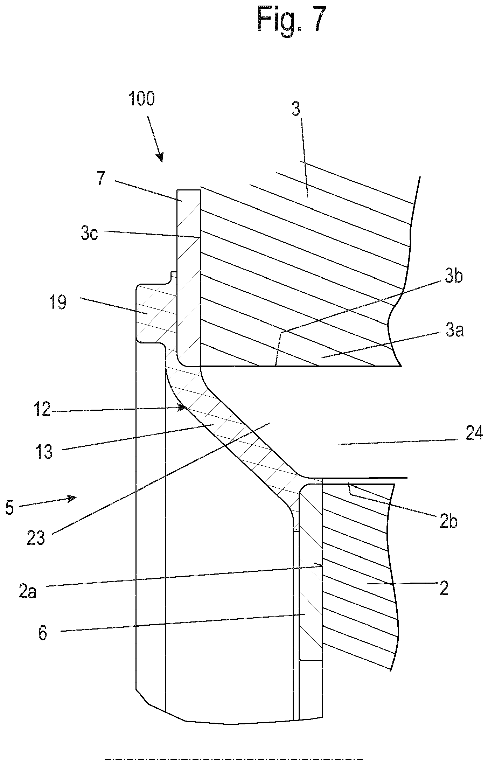

In **Fig. 7** verläuft der Rand 3b des Innenabschnitts 3a des Schwungrings 3 axial in Verlängerung des Randes des Innendurchmessers des zweiten Rings 7 und parallel zu dem Rand 2b des Nabenteils 2 und zu der Drehachse 1a. Dabei ist ein gemeinsamer, großer Zwischenraum 23, 24 zwischen den Rändern 3b und 2b gebildet, welcher nach außen hin durch den schräg verlaufenden Dichtungsabschnitt 13 des Dichtungselementes 12 verschlossen ist (auf der anderen, nicht gezeigten Seite durch das weitere Dichtungselement 12 ebenfalls).

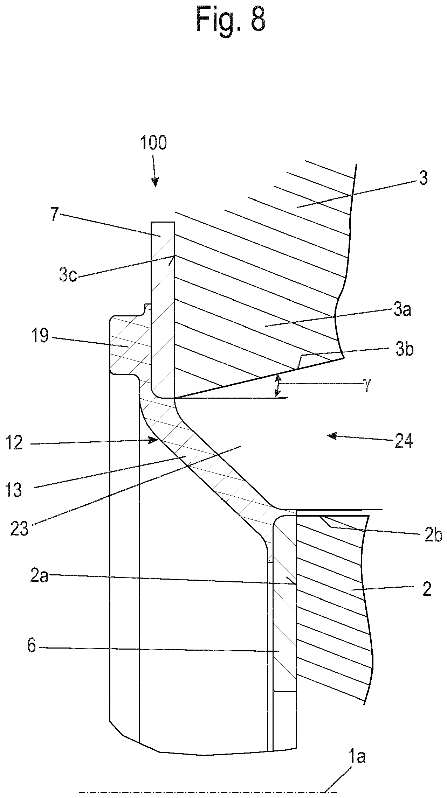

Eine weitere Vergrößerung des Zwischenraumes 23, 24 ist in **Fig. 8** dargestellt. Hierbei verläuft der Rand 3b des Innenabschnitts 3a des Schwungrings 3 in einem Winkel γ zu einer Parallele der Drehachse 1a schräg radial nach oben.

Die in den Figuren 6 bis 8 gezeigten Variation des Schwungrings 3 ermöglichen unterschiedliche Eigenschaften des Drehschwingungsdämpfers 1 bezüglich Massenträgheit und Ablauf des Silikonöls.

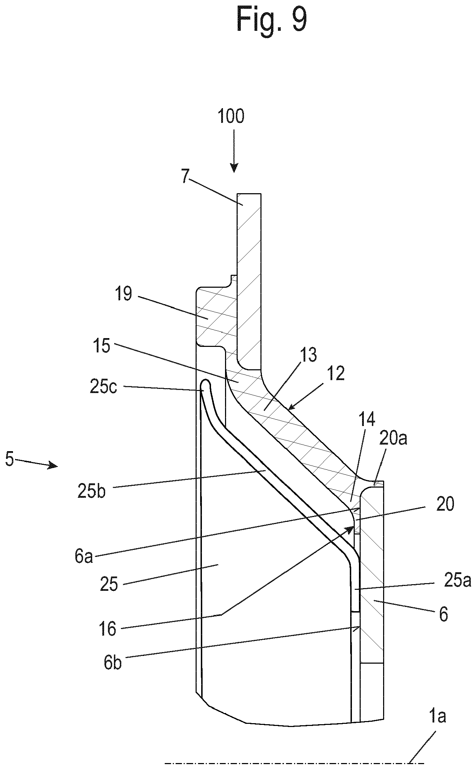

**Fig. 9** zeigt eine noch weitere vergrößerte schematische Schnittansicht des Bereiches V aus Fig. 3 und Fig. 4 mit einer Abdeckung 25 als einem zusätzlichen mechanischem Schutz der Dichtungseinrichtung 5 vor Beschädigung.

Diese Abdeckung 25 kann z.B. durch Anschweißen eines integrierten Bleches realisiert sein, wobei das Blech nach außen radial geöffnet ist, um einen Abtransport von Schmutz oder Partikeln, die sich an der Elastomerspur der Dichtungseinrichtung 5 sammeln, zu ermöglichen.

In dieser beispielhaften Darstellung ist die Abdeckung 25 in Form eines Blechrings mit Z-artigem Querschnitt ausgebildet. Sie weist einen radial verlaufenden Befestigungsabschnitt 25a, eine schräg verlaufende Wand 25b und einen im Wesentlichen wieder radial verlaufenden Randabschnitt 25c auf.

Mittels des Befestigungsabschnitts 25a ist die Abdeckung an einer Befestigungsfläche 6b unterhalb des Kantenbereiches 6a des ersten Rings 6 fest und dicht angebracht, z.B. geschweißt. Dabei verläuft die Wand 25b in etwa parallel zu dem Dichtungsabschnitt 13 des Dichtungselementes 12 in einem Abstand zu dem Dichtungsabschnitt 13. Der Randabschnitt 25c der Abdeckung 25 verläuft hier der Verlauf des konvexen Übergangsabschnitts 15 des Dichtungselementes 12 entsprechend und legt mit diesem eine radiale Öffnung zwischen der Wand 25b und dem Dichtungsabschnitt 13 fest. Natürlich sind auch andere Ausgestaltungen möglich, so kann z.B. die Wand 25b kürzer oder auch länger sein oder einen anderen Winkel aufweisen.

Es sei noch erwähnt, dass der Schwungring 3 hier aus mindestens zwei Bauteilen besteht, um diesen Schwungring 3 auf dem Nabenteil 2 montieren zu können. Hierbei sind alle bisher bekannten Konstruktionsformen denkbar.

Die Erfindung ist durch das oben angegebene Ausführungsbeispiel nicht eingeschränkt, sondern im Rahmen der Ansprüche modifizierbar.

### Bezugszeichenliste

- 1, 1': Drehschwingungsdämpfer
- 1a: Drehachse
- 2: Nabenteil
- 2a: Befestigungsfläche
- 2b: Rand
- 3: Schwungring
- 3a: Innenabschnitt
- 3b: Rand
- 3c: Befestigungsfläche
- 4: Spalt
- 5: Dichtungseinrichtung
- 6: Ring
- 6a: Kantenbereich
- 6b: Befestigungsfläche
- 6c: Rundung
- 6d: Mantelfläche
- 7: Ring
- 7a: Kantenbereich
- 7b: Rundung
- 7c: Mantelfläche
- 8: Ring
- 9: Gleitlager
- 10: Flansch
- 11: Steg
- 12: Dichtungselement
- 13: Dichtungsabschnitt
- 14, 15: Übergangsabschnitt
- 16, 17: Befestigungsabschnitt
- 18: Überstand
- 19: Lippe
- 20: Überstand
- 21,22: Ausnehmung
- 21a, 22a: Hohlkehle
- 23, 24: Zwischenraum
- 25: Abdeckung
- 25a: Befestigungsabschnitt
- 25b: Wand
- 25c: Randabschnitt
- 100, 100': Deckel
- α, β, γ: Winkel

## Patentansprüche

1. Drehschwingungsdämpfer (1) mit einem auf einer Antriebswelle eines Motors befestigbaren Nabenteil (2) (Primärmasse) und einem das Nabenteil (2) im radial äußeren Bereich umfassenden Schwungring (3) (Sekundärmasse), wobei zwischen Nabenteil (2) und Schwungring (3) ein mit einem Fluid gefüllter Spalt (4) und Dichtungseinrichtungen (5) vorgesehen sind, mittels derer ein Austreten des Fluids vermieden werden soll, wobei die Dichtungseinrichtungen (5) jeweils einen ersten, mit dem Nabenteil (2) dicht verbundenen Ring (6) sowie jeweils einen mit dem Schwungring (3) dicht verbundenen zweiten Ring (7) sowie jeweils ein Dichtungselement (12) aus einem Elastomer aufweisen, welches jeweils einerseits abdichtend mit dem ersten Ring (6) und jeweils andererseits mit dem zweiten Ring (7) verbunden ist,
**dadurch gekennzeichnet, dass**
das jeweilige Dichtungselement (12) mit Befestigungsabschnitten (16, 17) an einer jeweiligen außen liegenden Axialseite des ersten und zweiten Rings (6, 7) anvulkanisiert ist.

2. Drehschwingungsdämpfer nach Anspruch 1, **dadurch gekennzeichnet, dass** die jeweiligen außen liegenden Axialseiten des ersten und zweiten Rings (6, 7) von dem Schwungring (3) (Sekundärmasse) abgewandt sind.

3. Drehschwingungsdämpfer nach Anspruch 1 oder 2, **dadurch gekennzeichnet, dass** das jeweilige Dichtungselement (12) weiterhin an einer jeweiligen Radialseite eines Außendurchmessers des ersten Rings (6) und an einer jeweiligen Radialseite eines Innendurchmessers des zweiten Rings (7) anvulkanisiert ist.

4. Drehschwingungsdämpfer nach einem der vorstehenden Ansprüche, **dadurch gekennzeichnet, dass** der Außendurchmesser des ersten Rings (6) kleiner als der Innendurchmesser des zweiten Rings (7) ist.

5. Drehschwingungsdämpfer nach einem der vorstehenden Ansprüche, **dadurch gekennzeichnet, dass** ein Dichtungsabschnitt (13) des jeweiligen ringförmigen Dichtungselementes (12) schräg unter einem Winkel (β) zu der axialen Richtung einer Drehachse (1a) des Drehschwingungsdämpfers (1) verläuft und einen Wert aufweist, der zwischen 15° und 50° liegt.

6. Drehschwingungsdämpfer nach einem der vorstehenden Ansprüche,
**dadurch gekennzeichnet, dass** der mit dem Nabenteil (2) verbundene erste Ring (6) und der mit dem Schwungring (3) verbundene zweite Ring (7) der Dichtungseinrichtungen (5) aus Metall bestehen.

7. Drehschwingungsdämpfer nach einem der vorstehenden Ansprüche,
**dadurch gekennzeichnet, dass** das/die aus Elastomer bestehende/n Dichtungselement/e (12) der Dichtungseinrichtung (5) mit den am Nabenteil (2) und am Schwungring (3) befestigten Ringen (6, 7) aus Metall durch eine während eines Elastomervernetzungsvorganges hergestellte Gummi-Metallverbindung abdichtend verbunden ist/sind.

8. Drehschwingungsdämpfer nach einem der vorhergehenden Ansprüche, **dadurch gekennzeichnet, dass** das Dichtungselement (12) aus Elastomer zwischen den jeweils ersten und zweiten Ringen (6, 7) der wenigstens einen Dichtungseinrichtung (5) aus einem hochtemperaturfähigen Elastomer, z.B. einem Silikonmaterial besteht.

9. Drehschwingungsdämpfer nach Anspruch 8, **dadurch gekennzeichnet, dass** das Dichtungselement (12) aus einem anorganisch gefüllten Silikonelastomer besteht, wobei der Anteil des anorganischen Materials mindestens 30% beträgt.

10. Drehschwingungsdämpfer nach einem der vorhergehenden Ansprüche, **dadurch gekennzeichnet, dass** der Schwungring (3) gegenüber dem Nabenteil (2) auf Gleitlagern (9) radial und/oder axial definiert gelagert ist.

11. Drehschwingungsdämpfer nach einem der vorhergehenden Ansprüche, **dadurch gekennzeichnet, dass** das Dichtungselement (12) einen axial nach außen vorstehenden Vorsprung als Lippe (19) aufweist.

12. Drehschwingungsdämpfer nach Anspruch 11, **dadurch gekennzeichnet, dass** die Lippe (19) an dem Befestigungsabschnitt (17) des Dichtungselementes (12) angeformt ist, mit welchem das Dichtungselement (12) an der außen liegenden Axialseite des zweiten Rings (7) befestigt ist.

13. Drehschwingungsdämpfer nach einem der vorhergehenden Ansprüche, **dadurch gekennzeichnet, dass** das Dichtungselement (12) eine Abdeckung (25) als mechanischen Schutz der Dichtungseinrichtung (5) vor Beschädigung aufweist.

14. Drehschwingungsdämpfer nach Anspruch 13, **dadurch gekennzeichnet, dass** das die Abdeckung (25) ein an dem ersten Ring (6) angebrachtes Blech ist, das nach außen radial geöffnet ist, wobei eine Wand (25b) der Abdeckung (25) parallel zu dem Dichtungsabschnitt (13) des Dichtungselementes (12) in einem Abstand zu dem Dichtungsabschnitt (13) angeordnet ist.

## Claims

1. Torsional vibration damper (1) having a hub part (2) (primary mass) that is able to be fastened to a driveshaft of a motor, and an inertia ring (3) (secondary mass) that surrounds the hub part (2) in the radially outer region, wherein a fluid-filled gap (4) and sealing devices (5), by means of which the escape of the fluid is intended to be avoided, are provided between the hub part (2) and inertia ring (3), wherein the sealing devices (5) each have a first ring (6), tightly connected to the hub part (2), and each have a second ring (7), tightly connected to the inertia ring (3), and each have a sealing element (12) which is made of an elastomer and which is connected in each case sealingly to the first ring (6) on one side and in each case to the second ring (7) on the other side,
**characterized in that**
the respective sealing element (12) has been vulcanized onto a respective external axial side of the first and second ring (6, 7) by fastening portions (16, 17).

2. Torsional vibration damper according to claim 1, **characterized in that** the respective external axial sides of the first and second ring (6, 7) face away from the inertia ring (3) (secondary mass).

3. Torsional vibration damper according to claim 1 or 2, **characterized in that** the respective sealing element (12) has also been vulcanized onto a respective radial side of an outside diameter of the first ring (6) and onto a respective radial side of an inside diameter of the second ring (7).

4. Torsional vibration damper according to any of the preceding claims, **characterized in that** the outside diameter of the first ring (6) is smaller than the inside diameter of the second ring (7).

5. Torsional vibration damper according to any of the preceding claims, **characterized in that** a sealing portion (13) of the respective annular sealing element (12) extends obliquely at an angle (β) to the axial direction of an axis of rotation (1a) of the torsional vibration damper (1) and has a value of between 15° and 50°.

6. Torsional vibration damper according to any of the preceding claims, **characterized in that** the first ring (6), connected to the hub part (2), and the second ring (7), connected to the inertia ring (3), of the sealing devices (5) consist of metal.

7. Torsional vibration damper according to any of the preceding claims, **characterized in that** the sealing element or elements (12), consisting of elastomer, of the sealing device (5) is/are sealingly connected to the metal rings (6, 7), fastened respectively to the hub part (2) and to the inertia ring (3), by a rubber-metal connection produced during an elastomer crosslinking process.

8. Torsional vibration damper according to any of the preceding claims, **characterized in that** the sealing element (12) made of elastomer between the respective first and second rings (6, 7) of the at least one sealing device (5) consists of a high-temperature-resistant elastomer, for example a silicone material.

9. Torsional vibration damper according to claim 8, **characterized in that** the sealing element (12) consists of an inorganically filled silicone elastomer, wherein the content of the inorganic material is at least 30%.

10. Torsional vibration damper according to any of the preceding claims, **characterized in that** the inertia ring (3) is mounted in a radially and/or axially defined manner on plain bearings (9) with respect to the hub part (2).

11. Torsional vibration damper according to any of the preceding claims, **characterized in that** the sealing element (12) has an axially outwardly protruding projection in the form of a lip (19).

12. Torsional vibration damper according to claim 11, **characterized in that** the lip (19) is integrally formed on the fastening portion (17) of the sealing element (12), by which the sealing element (12) is fastened to the external axial side of the second ring (7).

13. Torsional vibration damper according to any of the preceding claims, **characterized in that** the sealing element (12) has a cover plate (25) for mechanically protecting the sealing device (5) from damage.

14. Torsional vibration damper according to claim 13, **characterized in that** the cover plate (25) is a metal sheet that is attached to the first ring (6) and is open radially outwardly, wherein a wall (25b) of the cover plate (25) is arranged parallel to the sealing portion (13) of the sealing element (12) at a distance from the sealing portion (13).

## Revendications

1. Amortisseur de vibrations de torsion (1) avec une partie de moyeu (2) (masse primaire) pouvant être fixée sur un arbre d'entraînement d'un moteur et une bague d'inertie (3) (masse secondaire) comprenant la partie de moyeu (2) dans la zone radialement extérieure, dans lequel entre la partie de moyeu (2) et la bague d'inertie (3) sont prévus une fente (4) remplie d'un liquide et des appareils d'étanchéité (5) au moyen desquels une sortie du liquide doit être évitée, dans lequel les appareils d'étanchéité (5) présentent respectivement une première bague (6) reliée de manière étanche à la partie de moyeu (2), ainsi que respectivement une seconde bague (7) reliée de manière étanche à la bague d'inertie (3), ainsi que respectivement un élément d'étanchéité (12) réalisé à partir d'un élastomère qui est relié respectivement, d'une part, hermétiquement à la première bague (6) et respectivement, d'autre part, à la seconde bague (7),
**caractérisé en ce que**
l'élément d'étanchéité (12) respectif est vulcanisé avec des sections de fixation (16, 17) au niveau d'un côté axial respectif situé à l'extérieur de la première et seconde bagues (6, 7).

2. Amortisseur de vibrations de torsion selon la revendication 1, **caractérisé en ce que** les côtés axiaux respectifs situés à l'extérieur de la première et seconde bagues (6, 7) sont opposés à la bague d'inertie (3) (masse secondaire).

3. Amortisseur de vibrations de torsion selon la revendication 1 ou 2, **caractérisé en ce que** l'élément d'étanchéité (12) respectif est en outre vulcanisé au niveau d'un côté radial respectif d'un diamètre extérieur de la première bague (6) et au niveau d'un côté radial respectif d'un diamètre intérieur de la seconde bague (7).

4. Amortisseur de vibrations de torsion selon l'une quelconque des revendications précédentes, **caractérisé en ce que** le diamètre extérieur de la première bague (6) est inférieur au diamètre intérieur de la seconde bague (7).

5. Amortisseur de vibrations de torsion selon l'une quelconque des revendications précédentes, **caractérisé en ce qu'**une section d'étanchéité (13) de l'élément d'étanchéité (12) annulaire respectif s'étend de manière inclinée selon un angle (β) par rapport à la direction axiale d'un arbre rotatif (1a) de l'amortisseur de vibrations de torsion (1) et présente une valeur comprise entre 15° et 50 °.

6. Amortisseur de vibrations de torsion selon l'une quelconque des revendications précédentes, **caractérisé en ce que** la première bague (6) reliée à la partie de moyeu (2) et la seconde bague (7) reliée à la bague d'inertie (3) des appareils d'étanchéité sont composées de métal.

7. Amortisseur de vibrations de torsion selon l'une quelconque des revendications précédentes, **caractérisé en ce que** l'(les) élément(s) d'étanchéité (12) composé(s) d'élastomère de l'appareil d'étanchéité (5) est(sont) relié(s) hermétiquement aux bagues (6, 7) en métal fixées au niveau de la partie de moyeu (2) et au niveau de la bague d'inertie (3) par une liaison caoutchouc-métal réalisée pendant un processus de réticulation d'élastomère.

8. Amortisseur de vibrations de torsion selon l'une quelconque des revendications précédentes, **caractérisé en ce que** l'élément d'étanchéité (12) est composé d'élastomère entre les première et seconde bagues (6, 7) respectives de l'au moins un appareil d'étanchéité (5) à partir d'un élastomère résistant aux hautes températures, p. ex. un matériau en silicone.

9. Amortisseur de vibrations de torsion selon la revendication 8, **caractérisé en ce que** l'élément d'étanchéité (12) se compose d'un élastomère de silicone à charge inorganique, dans lequel la proportion du matériau inorganique est d'au moins 30 %.

10. Amortisseur de vibrations de torsion selon l'une quelconque des revendications précédentes, **caractérisé en ce que** la bague d'inertie (3) est montée de manière définie radialement et/ou axialement sur des paliers lisses (9) par rapport à la partie de moyeu (2).

11. Amortisseur de vibrations de torsion selon l'une quelconque des revendications précédentes, **caractérisé en ce que** l'élément d'étanchéité (12) présente une saillie axiale vers l'extérieur en tant que lèvre (19).

12. Amortisseur de vibrations de torsion selon la revendication 11, **caractérisé en ce que** la lèvre (19) est formée au niveau de la section de fixation (17) de l'élément d'étanchéité (12), section avec laquelle l'élément d'étanchéité (12) est fixé au niveau du côté axial situé à l'extérieur de la seconde bague (7).

13. Amortisseur de vibrations de torsion selon l'une quelconque des revendications précédentes, **caractérisé en ce que** l'élément d'étanchéité (12) présente un couvercle (25) en tant que protection mécanique de l'appareil d'étanchéité (5) contre les détériorations.

14. Amortisseur de vibrations de torsion selon la revendication 13, **caractérisé en ce que** le couvercle (25) est une tôle montée au niveau de la première bague (6) qui est ouverte radialement vers l'extérieur, dans lequel une paroi (25b) du couvercle (25) est disposée parallèlement à la section d'étanchéité (13) de l'élément d'étanchéité (12) à une certaine distance de la section d'étanchéité (13).
